# EUROPEAN PATENT SPECIFICATION

(11) **EP 2 901 247 B1**
(45) Date of publication and mention of the grant of the patent: **04.04.2018**
(21) Application number: 12885500.4
(22) Date of filing: 22.11.2012
(51) Int. Cl.: G06F 3/01, G06F 3/048, G06F 3/041, G06F 9/44, G06K 9/00

(54) **PORTABLE DEVICE AND CONTROL METHOD THEREOF**
TRAGBARE VORRICHTUNG UND STEUERVERFAHREN DAFÜR
DISPOSITIF PORTABLE ET SON PROCÉDÉ DE COMMANDE

(30) Priority: 28.09.2012 KR 20120108824; 20.11.2012 US 201213682455
(43) Date of publication of application: 05.08.2015
(73) Proprietor: LG Electronics Inc., Yeongdeungpo-gu Seoul 150-721 (KR)
(72) Inventor: KIM, Jihwan, Seoul 137-724 (KR)
(74) Representative: Beyer, Andreas
(86) International application number: PCT/KR2012/009916
(87) International publication number: WO 2014/051201

(56) References cited:
- EP-A1- 2 461 235
- US-A1- 2005 199 783
- US-A1- 2009 160 778
- US-A1- 2010 169 766
- US-A1- 2011 210 926
- US-A1- 2011 316 797
- US-A1- 2012 038 582
- US-A1- 2012 223 890

## Description

### Technical Field

The present invention relates to a portable device, and more particularly to a portable device which is unlocked using a tactile user interface.

### Background Art

With an increase in market penetration of portable devices, users have utilized a variety of services, such as interpersonal communication, listening to music, Web surfing, electronic financial transaction, and the like, using portable devices. As portable devices provide services that could only be realized in the past using computers, users can utilize the aforementioned services regardless of time or place. Portable devices may undergo malfunction due to unintentional button push while being carried. To prevent malfunction due to unintentional button push, conventional portable devices have been designed such that a user cannot execute an application until the portable device is unlocked even after a display unit is activated by a power button. Accordingly, to execute an application, the user has to undergo a troublesome procedure of pushing the power button, performing a touch input for unlocking the portable device, and touching an icon of a desired application.

US 2012/0223890 A1 discloses a portable device with a touch screen in which the device can be unlocked by a drag touch gesture from the location of a locked icon to the location of a message alert icon. US 2011/0316797 A1 also discloses a portable device with a touch screen in which the device can be unlocked by a drag touch gesture. US 2005/0199783 A1 discloses a display which is switched between a fully on and a standby state based on detecting or failing to detect a user's eye respectively.

### Disclosure

### Technical Problem

Accordingly, the present invention is directed to a portable device and a control method thereof that substantially obviate one or more problems due to limitations and disadvantages of the related art.

An object of the present invention is to provide a portable device capable of shortening a procedure required for unlocking thereof and of achieving power reduction owing to unlocking techniques using a tactile user interface and a control method thereof.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Technical Solution

To achieve these objects and other advantages and in accordance with the purpose of the invention, as embodied and broadly described herein, a portable device is provided according to claim 1.

It is to be understood that both the foregoing general description and the following detailed description of the present invention are exemplary and explanatory and are intended to provide further explanation of the invention as claimed.

### Advantageous Effects

According to the present invention, it is possible to prevent a portable device from being unintentionally unlocked by a touch input.

Further, according to the present invention, it is possible to unlock the portable device using a tactile user interface.

According to the present invention, it is possible to execute a desired application via a single unlocking operation.

Further, according to the present invention, it is possible to unlock a user interface only when a touch gesture of dragging by a preset distance threshold or more is performed.

Furthermore, according to the present invention, it is possible to unlock a user interface only when a touch gesture of dragging for a preset time threshold or more is performed.

According to the present invention, it is possible to simultaneously input an
unlocking command and an application execution command.

Additionally, according to the present invention, it is possible to reduce power consumed by a display unit via unlocking techniques using a tactile user interface.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view illustrating a portable device unlocking method according to an embodiment of the present invention;
FIG. 2 is a view illustrating a visual user interface and a tactile user interface according to an embodiment of the present invention;
FIG. 3 is a view illustrating a method of unlocking a portable device and executing an application using a tactile user interface according to an embodiment of the present invention;
FIG. 4 is a view illustrating an unlocking condition of a portable device using a tactile user interface according to an embodiment of the present invention;
FIG. 5 is a view illustrating a portable device unlocking method in the case in which a plurality of applications corresponds to a plurality of regions respectively according to an embodiment of the present invention;
FIG. 6 is a view illustrating a touch gesture of executing an application according to an embodiment of the present invention;
FIG. 7 is a block diagram illustrating a portable device according to an embodiment of the present invention;
FIG. 8 is a view illustrating a method of unlocking a portable device and executing an application using a tactile user interface according to an embodiment of the present invention; and
FIG. 9 is a view illustrating a method of unlocking a portable device and executing an application using a tactile user interface according to another embodiment of the present invention.

### Best Mode for Carrying out the Invention

Hereinafter, the embodiments of the present invention will be described in detail with reference to illustrations of the accompanying drawings, but the present invention is not limited or restricted by these embodiments.

Although the terms used in the following description are selected, as much as possible, from general terms that are widely used at present while taking into consideration the functions obtained in accordance with the present invention, these terms may be replaced by other terms based on intensions of those skilled in the art, customs, emergence of new technologies, or the like. Also, in a particular case, terms that are arbitrarily selected by the applicant of the present invention may be used. In this case, the meanings of these terms may be described in corresponding description parts of the invention. Accordingly, it should be noted that the terms used herein should be construed based on practical meanings thereof and the whole content of this specification, rather than being simply construed based on names of the terms.

In the present invention, a portable device may be an electronic appliance that includes a display unit and a tactile feedback unit and provides a user with a visual user interface and a tactile user interface. The portable device may include an electronic appliance having a display unit, such as a smart phone, Personal Digital Assistant (PDA), cellular phone, MP3 music player, laptop computer, smart pad, tablet Personal Computer (PC), television, and smart table, for example. The portable device according to the present invention may transmit information to the user using the visual user interface and the tactile user interface. The visual user interface may provide the user with visual feedback using the display unit of the portable device. The user can visually confirm information provided from the portable device, and control the portable device. The tactile user interface may provide the user with tactile feedback using the tactile feedback unit of the portable device. The user can confirm information provided from the portable device via particular parts of the body that can perceive tactile sensation, such as the finger, etc., and control the portable device. The visual user interface and the tactile user interface may be separately provided, or may be simultaneously provided. In the following description, the portable device may provide at least one of the visual user interface and the tactile user interface.

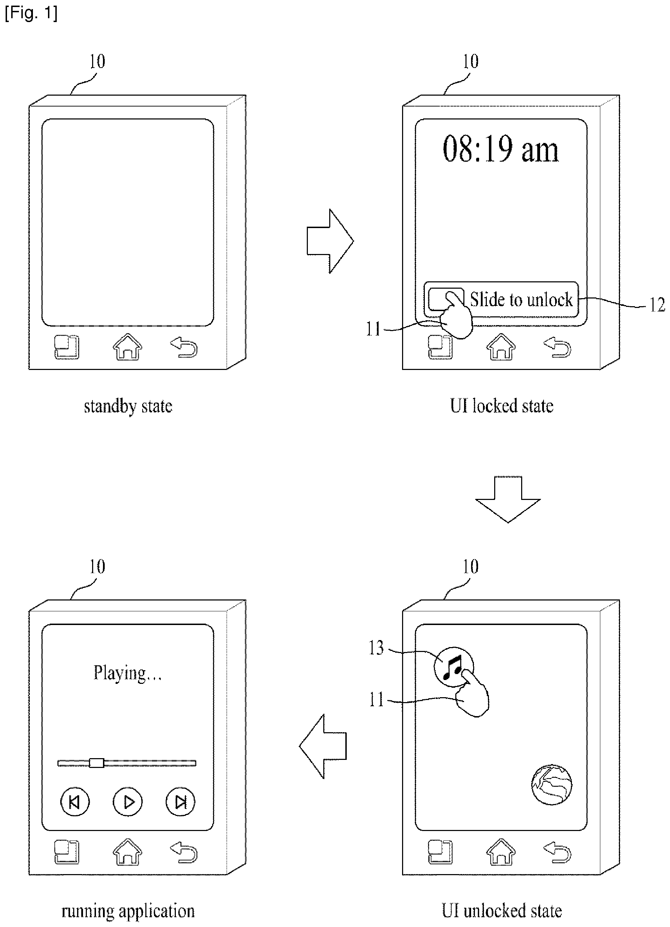

FIG. 1 is a view illustrating a portable device unlocking method according to an embodiment of the present invention. The portable device 10 may include a display unit, which is activated by a physical button, such as a power button or a home button, in a standby mode. In this case, the portable device 10 may display a slide bar 12 required for unlocking the portable device 10 via the display unit while maintaining a user interface in a locked state. A user can unlock the user interface by touching the slide bar 12 with the finger 11 or a stylus. Once the user interface has been unlocked, the portable device 10 may display one or more application icons 13, for example. Specifically, the user can visually search for an icon of a particular application that the user wishes to execute among the displayed application icons 13, and execute the corresponding application by touching the searched icon thereof. As such, to execute an application, the user has to undergo a troublesome procedure of pushing the power button, unlocking the user interface using the slide bar, and searching for and touching a desired application icon. Hereinafter, a portable device unlocking method to simplify the above described procedure and enhance user convenience will be described.

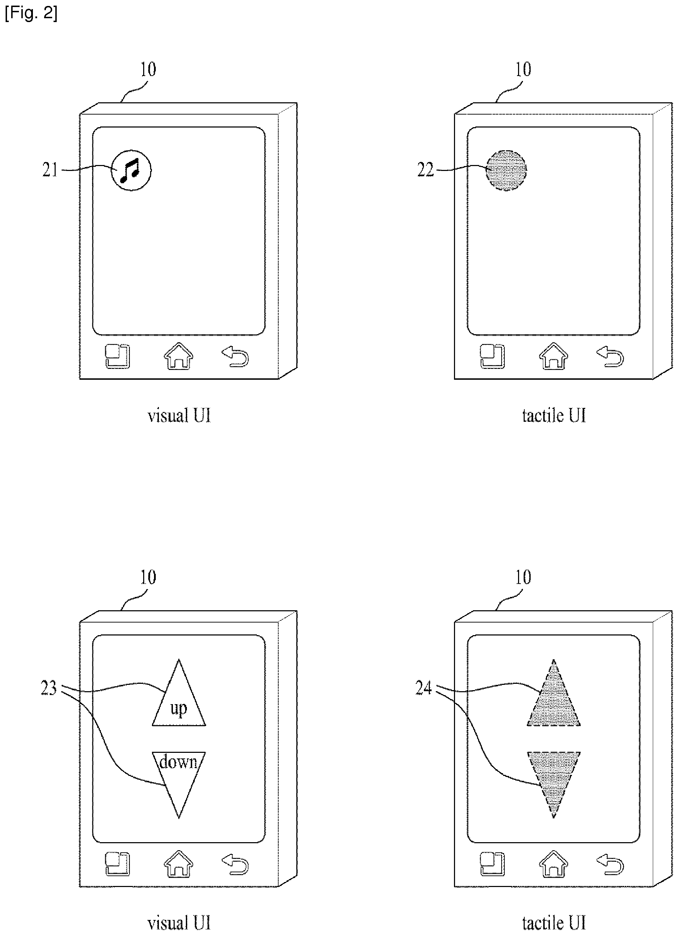

FIG. 2 is a view illustrating a visual user interface and a tactile user interface according to an embodiment of the present invention. The portable device 10 may display a visual user interface on the display unit. The portable device 10, as illustrated in the left upper side of FIG. 2, may display an application icon 21, to allow the user to touch the application icon 21 and execute a corresponding application. Additionally, the portable device 10, as illustrated in the left lower side of FIG. 2, may display a soft button 23 that may be used to assist the user in executing a particular function when a user touch input is detected. For example, assuming that 'up' and 'down' soft buttons for control of sound level are displayed, the user may raise or lower a sound level by touching the soft buttons.

The portable device may provide a tactile user interface using a tactile feedback unit. The portable device may provide the tactile user interface corresponding to the displayed visual user interface. The tactile user interface may provide tactile feedback similar to the visual user interface in terms of at least one of the position, shape and size thereof. For example, as illustrated in the right upper and lower sides of FIG. 2, the portable device 10 may provide a circular tactile button 22 at the same position as the application icon 21 under the assumption that the visual user interface is the circular application icon 21. Additionally, the portable device 10 may provide a triangular tactile button 24 under the assumption that the displayed visual user interface is the triangular soft button 23. As such, the portable device 10 may provide the user with a tactile user interface similar to the visual user interface in terms of at least one of the position, shape and size thereof. Through provision of the tactile user interface similar to the visual user interface, the user can control the portable device 10 via only tactile sensation even if there exists no visual user interface that the user can visually confirm.

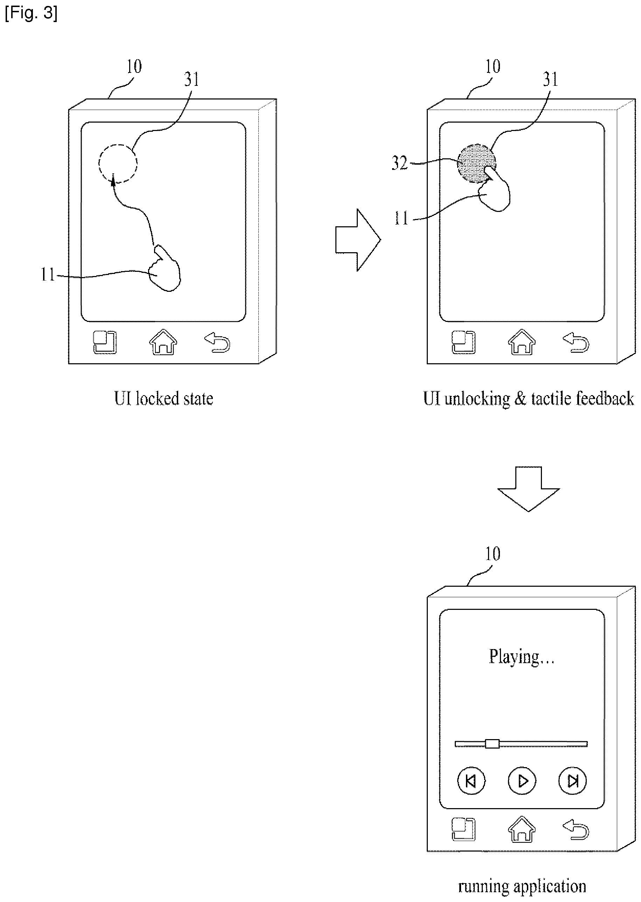

FIG. 3 is a view illustrating a method of unlocking a portable device and executing an application using a tactile user interface according to an embodiment of the present invention. Referring to the left upper side of FIG. 3, the portable device 10 is in a locked state and a touch sensor is activated by, for example, the power button. In such a state, the portable device 10 is capable of detecting a user touch gesture, and a visual user interface provided by the display unit may be in an inactivated state.

The portable device 10 may set a first region 31 on the display unit to correspond to an application. The first region 31 does not essentially correspond to the application and may correspond to a button, associated with a particular function, displayed during execution of the application. The portable device 10 may detect a touch gesture of entering the first region 31 from the outside of the first region 31 using a touch sensor. The portable device 10, as illustrated in the right upper side of FIG. 3, may generate tactile feedback 32 within the first region 31 once the touch gesture of entering the first region 31 from the outside of the first region 31 has been performed. The generated tactile feedback may be a tactile user interface provided by the portable device, and may inform the user that there exists an application corresponding to the first region. Additionally, the portable device may transmit information on the application to the user by controlling the generated tactile feedback. For example, if the portable device generates tactile feedback in the form of notes, this provides the user with information indicating that the application corresponding to the first region is a music player. The tactile user interface is not visually displayed, and the user can confirm the tactile user interface via tactile sensation.

To execute the application corresponding to the first region 31 as illustrated in the right lower side of FIG. 3, the user may input a touch gesture to execute the corresponding application. The portable device may unlock the user interface in response to a user touch gesture of entering the first region from the outside of the first region, or may unlock the user interface in response to a touch gesture of executing the application corresponding to the first region. Accordingly, the portable device of the present invention may unlock the user interface and execute the corresponding application by detecting the touch gesture of entering the first region from the outside of the first region and the consecutive touch gesture of executing the application. In this way, the user can search for and execute a desired application using only the tactile user interface without looking at the display unit.

In a state in which the touch sensor is activated by, for example, the power button, the locked portable device may provide only the tactile user interface, or may provide both the tactile user interface and the visual user interface. To distinguish between the two cases, the portable device may be operated based on detected results of the user's gaze or the user's face. More specifically, the portable device may simultaneously provide the tactile user interface and the visual user interface if the user's face of the user's gaze is detected when the portable device is switched to a locked state in which the touch sensor is activated by, for example, the power button. In this case, the user interfaces of the portable device are in a locked state, and as long as the user interfaces are not unlocked by the above described unlocking method, execution of an application does not occur even if the user directly touches a displayed icon of the corresponding application. If the user's face or the user's gaze is not detected when the portable device is switched to a locked state in which the touch sensor is activated by, for example, the power button, the portable device may provide only the tactile user interface except for the visual user interface. The portable device may activate the display unit and provide the user with the visual user interface only when unlocked by the above described unlocking method.

In another embodiment, the portable device may attempt to detect the user's gaze even when the portable device is unlocked and an application is executed. The portable device may provide the user with a visual user interface of the application if the user's gaze is detected, and may provide the user with a tactile user interface of the application if the user's gaze is not detected. In this way, the portable device may provide the visual user interface and the tactile user interface of the application together when the user's gaze is detected.

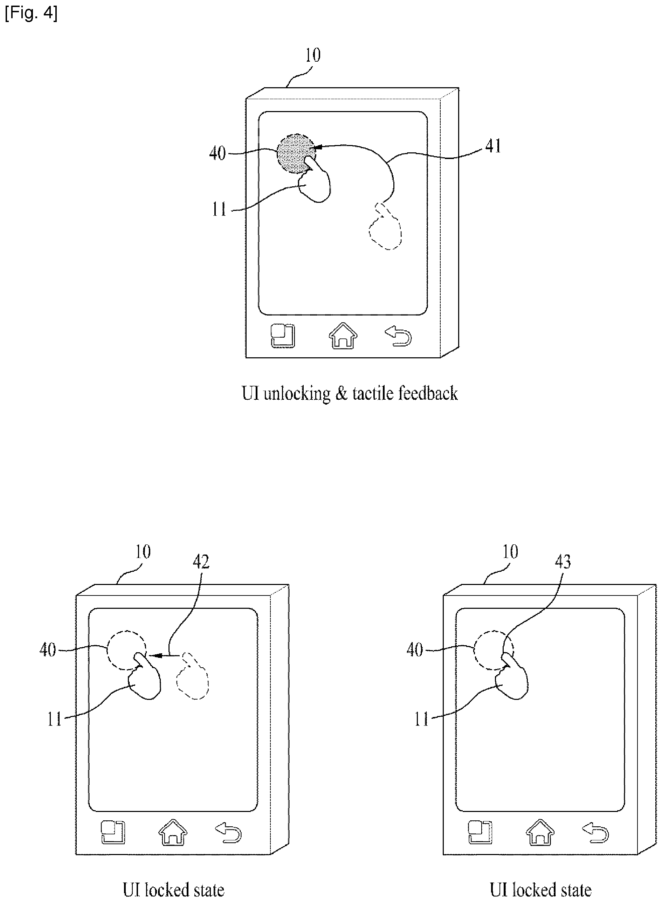

FIG. 4 is a view illustrating an unlocking condition of a portable device using a tactile user interface according to an embodiment of the present invention. The portable device 10 may be unlocked and generate tactile feedback only when a touch is dragged by a preset distance threshold or more and then enters a first region 40 by a user touch gesture 11. As illustrated in the upper side of FIG. 4, if the user touch gesture 11 of dragging a touch 41 by a preset distance threshold or more and entering the first region 40, the portable device 10 may unlock a user interface and generate tactile feedback based on the detected result. In another embodiment of the present invention, the portable device 10 may unlock a user interface in the case in which more than a preset number of changes in the direction of a user touch gesture occur and then the user touch gesture of entering the first region 40 is performed. Once the user interface has been unlocked, the portable device 10 may execute an application corresponding to the first region 40 upon receiving a user touch gesture.

As illustrated in the left lower side of FIG. 4, if the user touch gesture 11 of dragging a touch 42 by less than the preset distance threshold and entering the first region 40, the portable device 10 may keep the user interface locked based on the detected result. Accordingly, the application corresponding to the first region 40 is not executed. The portable device 10 may interpret a touch gesture of dragging by less than the preset distance threshold as that the user has no intention to unlock a user interface. In this way, the portable device 10 is free from sudden unlocking due to an unintentional touch gesture or incorrect touch.

The portable device 10, as illustrated in the right lower side of FIG. 4, may keep a user interface locked in the case in which a touch 43 of the user touch gesture 11 is detected from the beginning within the first region 40 rather than entering the first region 40 from the outside into the first region 40. The portable device 10 may keep the user interface locked even if the touch gesture that is first detected within the first region 40 is a touch gesture of dragging by a preset distance threshold or more within the first region 40. The portable device 10 may keep a user interface locked regardless of a moved distance of the touch gesture in the case in which no touch gesture of entering the first region 40 from the outside of the first region is detected.

In another embodiment of the present invention, the portable device 10 may be unlocked and generate tactile feedback only when the user touch gesture 11 of dragging for a preset time threshold or more and then entering the first region 40 is performed. As illustrated in the upper side of FIG. 4, if the user touch gesture 11 of dragging the touch 41 for a preset time threshold or more and entering the first region 40 is performed, the portable device 10 may unlock a user interface and generate tactile feedback based on the detected result. Once the user interface has been unlocked, the portable device 10 may execute an application corresponding to the first region 40 upon receiving a user touch gesture.

If the user touch gesture 11 of dragging the touch 42 for less than the preset time threshold and entering the first region 40 is performed, the portable device 10 may keep the user interface locked based on the detected result. Accordingly, the application corresponding to the first region 40 is not executed. The portable device 10 may interpret a touch gesture of dragging for less than a preset time threshold as that the user has no intention to unlock a user interface. In this way, the portable device 10 is free from sudden unlocking due to an unintentional touch gesture or incorrect touch.

In addition to the above described movement distance or time threshold, the portable device may be unlocked in response to a touch input having a preset pattern. That is, the portable device may detect a user touch gesture of dragging in a preset pattern and then entering the first region, and unlock a user interface based on the detected result.

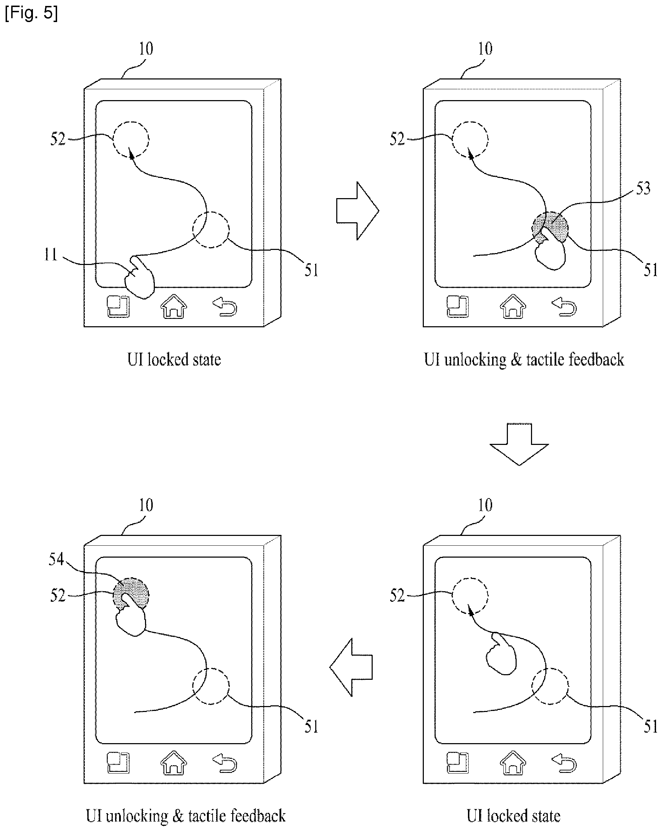

FIG. 5 is a view illustrating a portable device unlocking method in the case in which a plurality of applications corresponds to a plurality of regions respectively according to an embodiment of the present invention. As illustrated in the left upper side of FIG. 5, the portable device 10 may set a first region 51 and a second region 52, which respectively correspond to a first application and a second application. According to embodiments, instead of the first application and the second application, a first soft button and a second soft button may correspond to the respective regions 51 and 52. In the case in which the user touch gesture 11 of dragging by a distance threshold or more and entering the first region 51 from the outside of the first region 51 is performed as illustrated in the right upper side of FIG. 5, the portable device 10 may unlock a user interface. Additionally, the portable device 10 may generate tactile feedback 53 within the first region 51 so as to inform the user that the touch gesture 11 enters the first region 51. The portable device 10 may unlock a user interface after generating tactile feedback, or may simultaneously perform generation of tactile feedback and unlocking of the user interface.

Consequently, the portable device, which has unlocked the user interface, may execute the first application corresponding to the first region upon receiving a user touch gesture.

In a state in which the user interface is unlocked by the portable device 10, as illustrated in the right lower side of FIG. 5, the portable device 10 may lock the user interface if the user touch gesture 11 of dragging to the outside of the first region 51 is performed. In a state in which the user interface is locked by the portable device 10, as illustrated in the left lower side of FIG. 5, the portable device 10 may unlock the user interface if the user touch gesture 11 of dragging into the second region 52 from the outside of the second region 52. In this case, to permit unlocking by the portable device 10, a moved distance of the touch gesture 11 must be a preset distance threshold or more. The portable device 10 may generate tactile feedback 54 within the second region 52 and inform the user that the user touch gesture 11 enters the second region 52. The portable device 10 may generate tactile feedback prior to unlocking the user interface, or may simultaneously perform unlocking of the user interface and generation of tactile feedback.

In another embodiment, in a state in which the user interface is unlocked by the portable device 10, as illustrated in the right lower side of FIG. 5, the portable device 10 may not lock the user interface even when the user touch gesture 11 of dragging to the outside of the first region 51 is performed. In a state in which the user interface is unlocked by the portable device 10, the portable device 10 may generate the tactile feedback 54 within the second region 52 if the user touch gesture 11 of dragging into the second region 52 from the outside of the second region 52 as illustrated in the left lower side of FIG. 5, and inform the user that the touch gesture 11 enters the second region 52.

Consequently, the portable device, which has unlocked the user interface, may execute the second application corresponding to the second region upon receiving a user touch gesture.

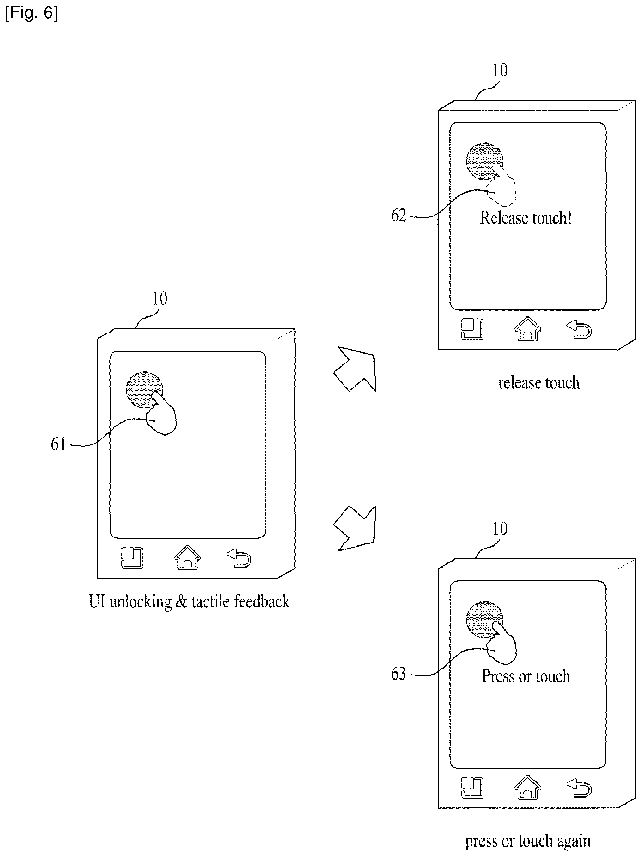

FIG. 6 is a view illustrating a touch gesture of executing an application according to an embodiment of the present invention. The portable device 10 may unlock a user interface and generate tactile feedback if a first user touch gesture 61 of dragging and entering a region corresponding to an application from the outside of the region is performed. In this case, the user may input a second touch gesture of executing the corresponding application so as to execute the corresponding application.

The second touch gesture may include a motion 62 of releasing contact of the first touch gesture from the region corresponding to the application. More specifically, if the user performs, on the display unit, the first touch gesture of entering the region corresponding to the application and then removes the finger from the corresponding region, the portable device 10 may detect this motion as the second touch gesture. As such, if the user ends the first touch gesture at the region corresponding to the application and removes the hand from the display unit, the portable device 10 may execute the corresponding application.

The second touch gesture may include a motion 63 of applying pressure of a preset pressure threshold or more to the region corresponding to the application consecutively to the first touch gesture. More specifically, if the user performs, on the display unit, the first touch gesture of entering the region corresponding to the application and then pressing the corresponding region, the portable device 10 may detect this motion as the second touch gesture. As such, if the user presses the display unit at the region corresponding to the application consecutively to the first touch gesture, the portable device 10 may execute the corresponding application. In this case, the user motion of pressing the display unit may be detected using a pressure sensor included in the portable device 10 or based on an increase in the touch area of the user's finger.

The second touch gesture may include a motion 63 of touching the region corresponding to the application consecutively to the first touch gesture. More specifically, if the user performs, on the display unit, the first touch gesture of entering the region corresponding to the application and then touching the corresponding region one time or multiple times, the portable device 10 may detect this motion as the second touch gesture. As such, if the user touches the display unit at the region corresponding to the application consecutively to the first touch gesture, the portable device 10 may execute the corresponding application.

In the case in which the above described second touch gesture is detected at the outside of the region corresponding to the application, the portable device 10 may switch the user interface to a locked state or may not execute the corresponding application. Additionally, if the second touch gesture is detected after a predetermined time has passed from a time point when the first touch gesture is detected, the portable device 10 may switch the user interface to a locked state, or may bypass the second touch gesture and not execute the corresponding application.

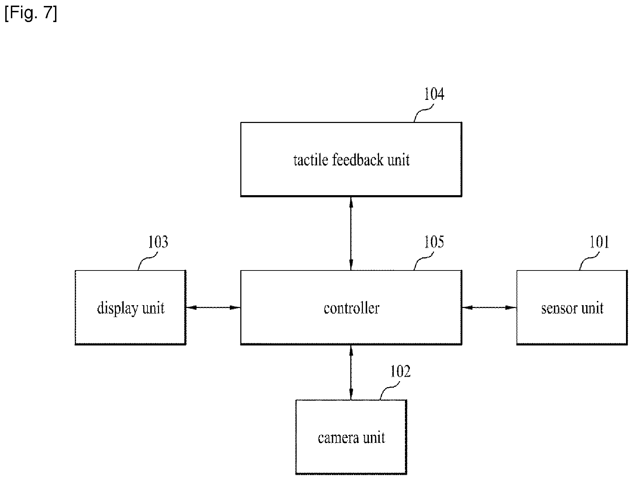

FIG. 7 is a block diagram illustrating a portable device according to an embodiment of the present invention. In FIG. 7, the portable device may include a sensor unit 101, a camera unit 102, a display unit 103, a tactile feedback unit 104, and a controller 105.

The sensor unit 101 may transmit a user input or an environment recognized by the portable device to the controller 105 using a plurality of sensors equipped in the portable device. The sensor unit 101 may include a plurality of sensing means. In an embodiment, the plurality of sensing means may include a piezoelectric sensor, a pressure sensor, an audio sensor, a video sensor, and a touch sensor, for example. In the present invention, the piezoelectric sensor, the pressure sensor and the touch sensor may detect a user touch input. The portable device may provide tactile feedback in response to the sensed touch input or the pressure of the touch input, and unlock a user interface. Also, the video sensor may detect the user's gaze. The video sensor may transmit an image, obtained by tracking pupils of the user or by perceiving blinking or the user's face, to the controller 105. The controller 105 may determine the presence or absence of the user's gaze based on the transmitted image. The sensor unit 101 is a generic term of the aforementioned various sensing means, and may detect touch inputs having various properties and transmit the sensed results to the controller 105, so as to allow the portable device to perform a corresponding operation. The aforementioned sensors may be embodied into separate elements included in the portable device, or may be combined to constitute at least one element included in the portable device.

The camera unit 102 may perform photographing of pictures and moving images. The camera unit 102 may be included in the video sensor of the sensor unit 101. Like the above described video sensor, the camera unit 102 may detect the user's gaze, and transmit an image, required to determine whether or not the user looks at the display unit 103, to the controller 105. The camera unit 102 may include an infrared camera to detect the user's gaze using the infrared camera in the case in which it is difficult to detect the user's gaze under a low illumination environment.

The display unit 103 may output an image on a display screen. The display unit 103 may serve as the above described touch sensor under the assumption that the display unit 103 is of a touch sensitive display type. Accordingly, the display unit 103 may detect a touch input thereto, and transmit the touch input to the controller 105. The display unit 103 may serve to display a visual user interface on a display panel, or to control display of an image. In the present invention, the display unit 103 may display a visual user interface, and detect a user touch input. Also, the display unit 103 may provide the user with tactile feedback in conjunction with the tactile feedback unit 104 that will be described hereinafter. The display unit 103 may include a flexible display.

The tactile feedback unit 104 may provide a tactile user interface. The tactile feedback unit 104 may provide a tactile user interface associated with the visual user interface that is provided by the display unit 103. The tactile user interface may be similar to the visual user interface in terms of at least one of a position, shape and size thereof. The user can confirm the tactile user interface via tactile sensation, and unlock and control the portable device. A method of providing the user with the tactile user interface using the tactile feedback unit 104 is as follows. Tactile feedback may be provided with respect to the user's finger or a stylus that touches the display unit 103 using a minutely vibrating actuator. The tactile feedback unit 104 may adjust the frequency and magnitude of vibration, thereby adjusting friction between the user's finger and the display unit 103. Additionally, the tactile feedback unit 104 may provide the user with tactile feedback by applying a fine current to the display unit 103. The tactile feedback unit 104 may adjust the strength and generation period of current, which may provide the user with different tactile sensations. Additionally, the tactile feedback unit 104 may provide tactile feedback using ultrasonic resonance. The tactile feedback unit 104 may provide the user with tactile feedback by generating ultrasonic wave plural times and causing resonation of the ultrasonic waves within a specific range. The tactile feedback unit 104 may provide different tactile feedback by adjusting the magnitude of resonance frequency and the resonance generation period of the frequency.

The controller 105 may control the above described units of the portable device, and manage data transmission/reception between the units. In the present invention, the controller 105 may determine the presence or absence of the user's gaze by analyzing an image obtained when detecting the user's gaze transmitted from each of the sensor unit 101 or the camera unit 102. Additionally, the controller 105 may determine whether or not to unlock a user interface by calculating a moved distance of a user touch gesture toward a region corresponding to an application. In the present invention, the controller 105 may activate the touch sensitive display unit to detect a user touch gesture. In this case, the touch sensitive display unit may provide only the tactile user interface without the visual user interface. Additionally, the controller 106 may activate the touch sensor, the piezoelectric sensor and the pressure sensor of the sensor unit 101, instead of the display unit 103, in order to detect a user touch gesture.

The controller 105 may detect a user touch gesture using the activated touch sensitive display unit. If the user touch gesture is a touch gesture of dragging into a region corresponding to an application from the outside and a dragged length of the corresponding touch gesture exceeds a threshold, the controller 105 may unlock a user interface of the portable device. Additionally, the controller 105 may execute an application if a touch gesture of executing the corresponding application is detected in a region corresponding to the application. FIG. 7 is a block diagram according to the embodiment of the present invention, and separately displayed blocks represent logically distinguished elements of the device. Accordingly, the elements of the above described device may be mounted in a single chip or in a plurality of chips according to a device design.

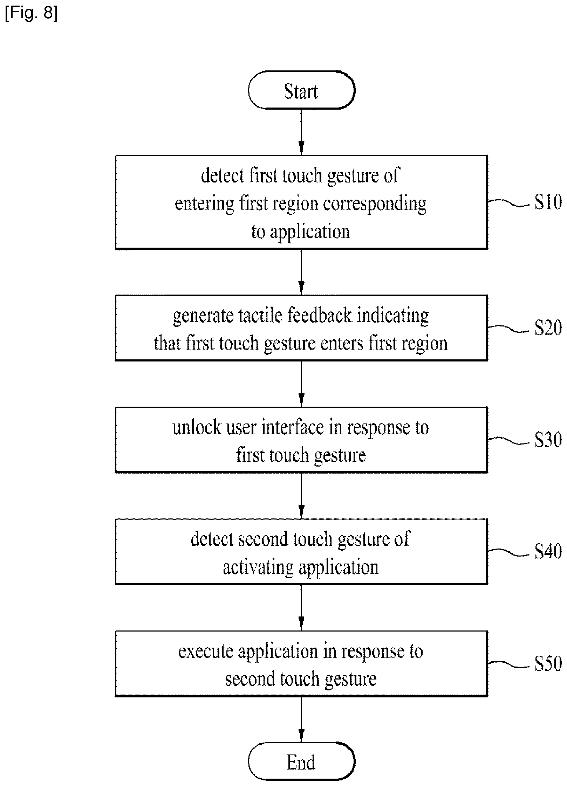

FIG. 8 is a view illustrating a method of unlocking a portable device and executing an application using a tactile user interface according to an embodiment of the present invention.

The portable device may keep a display unit and a tactile feedback unit in an inactivated state in a standby mode. Then, the portable device may switch a user interface to a locked state upon detecting a user input in the standby mode. Here, detection of the user input, as described above with reference to FIG. 1, may include detection of a user motion of pressing a power button, or detection of user's voice or a user gesture. In a locked state of the user interface, the portable device may detect a user touch gesture using a touch sensor.

The portable device may detect a first touch gesture with respect to a first region corresponding to an application, i.e. a touch gesture of entering the first region from the outside of the first region (S10). The portable device may set the first region on the touch sensitive display unit so as to correspond to the application. The first region may be set to correspond to a region in which a visual user interface of the corresponding application is displayed. The portable device may detect the first touch gesture of entering the first region from the outside of the first region. The first touch gesture may mean a gesture of contacting the touch sensitive display unit at the outside of the first region and dragging into first region.

The portable device may generate tactile feedback indicating that the first touch gesture enters the first region (S20). The portable device may generate tactile feedback as a tactile user interface when the user's finger or a stylus enters the first region by the first touch gesture. The portable device may inform the user that the user's finger or the stylus is located in the first region corresponding to the application by generating tactile feedback. As described above with reference to FIG. 2, the tactile feedback may be generated in association with a visual user interface of the corresponding application. For example, the portable device may provide the tactile user interface similar to the visual user interface in terms of at least one of the size, shape and position thereof, and the tactile feedback may be generated based on the tactile user interface.

The portable device may unlock the user interface in response to the first touch gesture (S30). The portable device, as described above with reference to FIG. 4, may consider two conditions in order to unlock the user interface. The first condition is whether or not the first touch gesture enters the first region from the outside of the first region. The portable device may unlock the user interface when the detected first touch gesture enters the first region from the outside of the first region. The portable device may keep the user interface locked if the portable device initially detects the first touch gesture within the first region. On the other hand, if the first touch gesture is detected within the first region, and thereafter deviates from the first region and then again enters the first region, the portable device may unlock the user interface.

The second condition is whether or not a moved distance of the first touch gesture is a preset distance threshold or more. The portable device may keep the user interface locked if a moved distance of the detected first touch gesture is less than a preset distance threshold and the first touch gesture enters the first region from the outside of the first region. The distance threshold may be arbitrarily set by the user or upon fabrication of the portable device. As described above with reference to FIG. 4, the second condition may be set based on whether or not the first touch gesture is maintained for a preset touch time threshold.

The portable device may prevent malfunction of the portable device due to unintentional touch based on the above described two conditions. The above described tactile feedback generation and unlocking operations may be reversed in sequence. That is, the portable device may generate tactile feedback after unlocking the user interface. According to embodiments, the portable device may simultaneously perform unlocking of the user interface and generation of the tactile feedback.

The user interface of the portable device may include a visual user interface and a tactile user interface. The portable device may detect the user's gaze when unlocking the user interface. The portable device may unlock the visual user interface when the user's gaze is detected. Additionally, the portable device may unlock the tactile user interface along with the visual user interface. The portable device may activate the display unit while unlocking the visual user interface, and may allow the user to visually confirm the visual user interface. Also, the portable device may activate the tactile feedback unit while unlocking the tactile user interface, and may allow the user to confirm the tactile user interface via tactile sensation. The portable device may unlock only the tactile user interface when the user's gaze is not detected. Thereby, the portable device may provide the tactile user interface using only the tactile feedback unit without unnecessarily activating the display unit, thereby achieving power saving effects.

The portable device may detect a second touch gesture of activating an application (S40). As described above with reference to FIG. 6, the portable device may detect the second touch gesture of executing the application. The second touch gesture may be input consecutively to the first touch gesture. The portable device may detect a motion of releasing the first touch gesture from the first region as the second touch gesture. After the user's finger enters the first region from the outside via the first touch gesture, the portable device may end the first touch gesture on the touch sensitive display unit. Then, the portable device may detect the second touch gesture if the user's finger is released from the display unit.

The portable device may detect a motion of pressing or touching the first region as the second touch gesture, consecutively to the first touch gesture of entering the first region. In this case, the pressing or touching motion may include a multiple touch of pressing or touching the first region multiple times. The portable device may detect the second user touch gesture using a piezoelectric sensor or a touch sensor.

The portable device may execute an application in response to the second touch gesture (S50). The portable device may execute the application corresponding to the first region to provide the user with the application. Once the application has been executed, the portable device may provide the user with an execution screen. If the user's gaze is detected in the above described unlocking operation, the portable device may provide the execution screen of the application via the visual user interface. The portable device may provide the execution screen of the application via the tactile user interface along with the visual user interface. Thereby, the user may control the corresponding application visually or via tactile sensation.

The portable device may provide the execution screen of the application via the tactile user interface when the user's gaze is not detected in the above described unlocking operation. Thereby, the user may control the corresponding application without looking at the portable device.

The portable device may not execute the application if the user's finger presses or touches a region outside of the first region by the second touch gesture. This is because whether or not the user intends to execute the application corresponding to the first region is unclear. Also, the portable device may not execute the application corresponding to the first region if a time taken from completion of the first touch gesture to occurrence of the second touch gesture exceeds a preset time threshold. This is because the second touch gesture input beyond the time threshold cannot be interpreted as an input consecutive to the first touch gesture. In this case, the portable device may not execute the application while keeping the user interface unlocked. In another embodiment, the portable device may again lock the user interface if the second touch gesture of executing the application is not input.

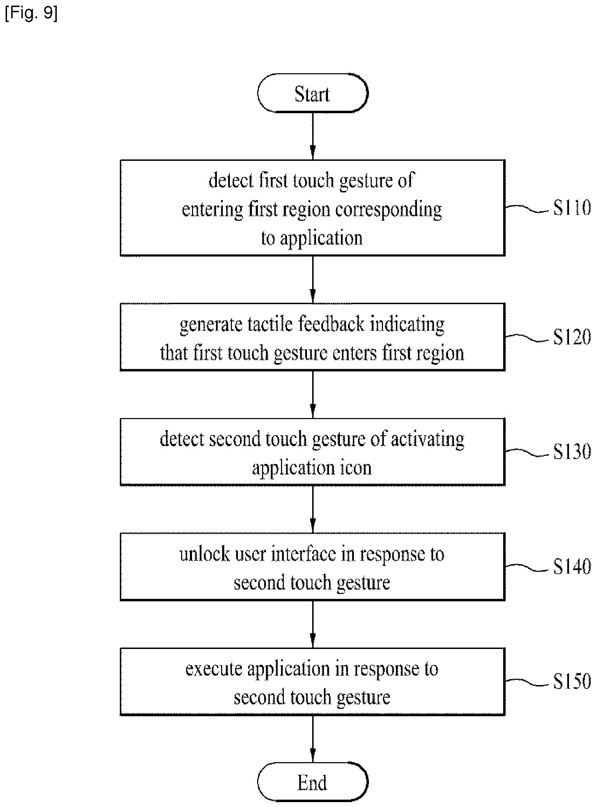

FIG. 9 is a view illustrating a method of unlocking a portable device and executing an application using a tactile user interface according to another embodiment of the present invention.

The portable device may detect a first touch gesture with respect to a first region corresponding to an application, i.e. a touch gesture of entering the first region from the outside of the first region (S110). The portable device may detect the initial first touch gesture of entering the first region from the outside of the first region using the touch sensitive display unit. Additionally, the portable device may detect the first touch gesture of entering the first region while maintaining contact with the touch sensitive display unit. The portable device, as described above with reference to FIG. 4, may not detect the touch gesture of dragging by less than a preset distance threshold as the first touch gesture.

The portable device may generate tactile feedback indicating that the first touch gesture enters the first region (S120). The portable device may inform the user, using a tactile feedback unit, that an application corresponding to the first region that the first touch gesture enters is present. The portable device may keep the user interface locked until the second touch gesture is detected. Accordingly, if the first touch gesture within the first region deviates from the first region and is detected in a second region corresponding to another application, the portable device, as described above with reference to FIG. 5, may generate tactile feedback in the second region while keeping the user interface locked.

The portable device may detect a second touch gesture of activating the application (S130). The second touch gesture may be input consecutively to the first touch gesture. If the second touch gesture is input within a preset time threshold after ending of the first touch gesture, the portable device may interpret the first and second touch gestures as consecutive touch gestures. The portable device, as described above with reference to FIG. 6, may detect a motion of releasing the first user touch gesture or a motion of pressing or touching the first region consecutively to the first touch gesture as the second touch gesture.

The portable device may unlock the user interface (S140), and execute the application (S150) in response to the second touch gesture. The portable device may unlock the user interface and execute the application corresponding to the first region only after the second touch gesture is detected. According to embodiments, the portable device may simultaneously perform unlocking of the user interface and execution of the application. The user interface to be unlocked may include the tactile user interface. When the user's gaze is detected, the portable device may provide the visual user interface and the tactile user interface together.

As described above, the portable device of the present invention may allow the user to simply unlock the user interface and execute the application using the tactile user interface.

It will be apparent to those skilled in the art that various modifications and variations can be made in the present invention without departing from the scope of the invention. Thus, it is intended that the present invention covers the modifications and variations of this invention provided they come within the scope of the appended claims.

### Mode for Invention

Various embodiments have been described in the best mode for carrying out the invention.

### Industrial Applicability

As described above, the present invention is totally or partially applicable to electronic devices.

## Claims

1. A portable device (10) comprising:
a touch sensitive display unit (103) configured to sense a touch input;
a tactile feedback unit (104) configured to generate tactile feedback;
a camera unit (102) configured to detect a user's gaze; and
a control unit (105) configured to:
when the portable device (10) is in a locked state,
detect a first touch gesture with respect to a first region corresponding to an application on the touch sensitive display unit, wherein the first touch gesture enters the first region from outside of the first region;
attempt to detect the user's gaze when the first touch gesture is detected;
generate tactile feedback indicating that the first touch gesture enters the first region;
unlock the visual user interface in response to the first touch gesture if the user's gaze is detected;
unlock the tactile user interface in response to the first touch gesture if the user's gaze is not detected;
detect a second touch gesture of activating the application, wherein the second touch gesture is input consecutively to the first touch gesture; and
execute the application in response to the second touch gesture.

2. The portable device according to claim 1, wherein both the visual user interface and the tactile user interface are unlocked if the user's gaze is detected.

3. The portable device according to claim 1 or 2, wherein execution of the application in response to the second touch gesture includes:
detecting the user's gaze;
providing the visual user interface of the application if the user's gaze is detected; and
providing the tactile user interface of the application if the user's gaze is not detected.

4. The portable device according to any one of claims 1 to 3, wherein execution of the application in response to the second touch gesture includes providing the tactile user interface along with the visual user interface of the application if the user's gaze is detected.

5. The portable device according to any one of claims 1 to 4, wherein the second touch gesture includes a motion of releasing contact of the first touch gesture with respect to the display unit from the first region.

6. The portable device according to any one of claims 1 to 4, wherein the second touch gesture includes a motion of pressing the first region with a pressure of a preset pressure threshold or more.

7. The portable device according to any one of claims 1 to 4, wherein the second touch gesture includes a motion of touching the first region multiple times.

8. The portable device according to any one of claims 1 to 4, wherein the application is executed in response to the second touch gesture, if the second touch gesture is input within a predetermined time from a time point when the first touch gesture is detected.

9. The portable device according to any one of claims 1 to 4, wherein the application is executed in response to the second touch gesture, if the second touch gesture is detected at the inside of the first region.

10. The portable device according to any one of claims 1 to 9, wherein the tactile feedback with respect to the first touch gesture is generated in the first region according to at least one of shape, position and size of the visual user interface in relation to the application.

11. The portable device according to any one of claims 1 to 10, wherein unlocking of the user interface in response to the first touch gesture includes:
calculating a touch time of the first touch gesture;
unlocking the user interface if the touch time of the first touch gesture exceeds a preset threshold; and
keeping the user interface locked if the touch time of the first touch gesture is the preset threshold or less.

12. The portable device according to any one of claims 1 to 10, wherein unlocking of the user interface in response to the first touch gesture includes:
calculating a movement distance of the first touch gesture;
unlocking the user interface if the movement distance of the first touch gesture exceeds a distance threshold; and
keeping the user interface locked if the movement distance of the first touch gesture is the preset threshold or less.

## Patentansprüche

1. Tragbare Vorrichtung (10), mit:
einer berührungsempfindlichen Anzeigeeinheit (103), die dazu konfiguriert ist, eine Berührungseingabe zu erfassen;
einer Einheit für taktile Rückmeldungen (104), die dazu konfiguriert ist, eine taktile Rückmeldung zu erzeugen;
einer Kameraeinheit (102), die dazu konfiguriert ist, einen Blick eines Benutzers zu erkennen; und
einer Steuereinheit (105), die konfiguriert ist zum:
wenn die tragbare Vorrichtung (10) in einem gesperrten Zustand ist,
Erkennen einer ersten Berührungsgeste in Bezug auf einen ersten Bereich, der einer Anwendung auf der berührungsempfindlichen Anzeigeeinheit entspricht, wobei die erste Berührungsgeste von außerhalb des ersten Bereichs in den ersten Bereich eindringt;
Versuchen, den Blick des Benutzers zu erkennen, wenn die erste Berührungsgeste erkannt wurde;
Erzeugen einer taktilen Rückmeldung, die anzeigt, dass die erste Berührungsgeste in den ersten Bereich eindringt;
Entsperren der visuellen Benutzerschnittstelle als Reaktion auf die erste Berührungsgeste zu entsperren, falls der Blick des Benutzers erkannt wird;
Entsperren der taktilen Benutzerschnittstelle als Reaktion auf die erste Berührungsgeste, falls der Blick des Benutzers nicht erkannt wird;
Erkennen einer zweiten Berührungsgeste zum Aktivieren der Anwendung, wobei die zweite Berührungsgeste eine Eingabe ist, die auf die erste Berührungsgeste folgt; und
Ausführen der Anwendung als Reaktion auf die zweite Berührungsgeste.

2. Tragbare Vorrichtung nach Anspruch 1, wobei sowohl die visuelle Benutzerschnittstelle als auch die taktile Benutzerschnittstelle entsperrt werden, falls der Blick des Benutzers erkannt wurde.

3. Tragbare Vorrichtung nach Anspruch 1 oder 2, wobei die Ausführung der Anwendung als Reaktion auf die zweite Berührungsgeste umfasst:
Erkennen des Blicks des Benutzers;
Bereitstellen der visuellen Benutzerschnittstelle der Anwendung, falls der Blick des Benutzers erkannt wurde; und
Bereitstellen der taktilen Benutzerschnittstelle der Anwendung, falls der Blick des Benutzers nicht erkannt wurde.

4. Tragbare Vorrichtung nach einem der Ansprüche 1 bis 3, wobei die Ausführung der Anwendung als Reaktion auf die zweite Berührungsgeste ein Bereitstellen der taktilen Benutzerschnittstelle zusammen mit der visuellen Benutzerschnittstelle der Anwendung enthält, falls der Blick des Benutzers erkannt wurde.

5. Tragbare Vorrichtung nach einem der Ansprüche 1 bis 4, wobei die zweite Berührungsgeste eine Bewegung des Lösens eines ersten Berührungsgestenkontakts aus dem ersten Bereich bezüglich der Anzeigeeinheit umfasst.

6. Tragbare Vorrichtung nach einem der Ansprüche 1 bis 4, wobei die zweite Berührungsgeste eine Drückbewegung des ersten Bereichs mit einem Druck eines voreingestellten Druckschwellenwerts oder kräftiger enthält.

7. Tragbare Vorrichtung nach einem der Ansprüche 1 bis 4, wobei die zweite Berührungsgeste eine Bewegung zum mehrmaligen Berühren des ersten Bereichs enthält.

8. Tragbare Vorrichtung nach einem der Ansprüche 1 bis 4, wobei die Anwendung als Reaktion auf die zweite Berührungsgeste ausgeführt wird, falls die zweite Berührungsgeste innerhalb einer vorbestimmten Zeit ab einem Zeitpunkt eingegeben wird, zu dem die erste Berührungsgeste erkannt wird.

9. Tragbare Vorrichtung nach einem der Ansprüche 1 bis 4, wobei die Anwendung als Reaktion auf die zweite Berührungsgeste ausgeführt wird, falls die zweite Berührungsgeste innerhalb des ersten Bereichs erkannt wird.

10. Tragbare Vorrichtung nach einem der Ansprüche 1 bis 9, wobei die taktile Rückmeldung in Bezug auf die erste Berührungsgeste im ersten Bereich gemäß einer Form und/oder Position und/oder Größe der visuellen Benutzerschnittstelle bezüglich der Anwendung generiert wird.

11. Tragbare Vorrichtung nach einem der Ansprüche 1 bis 10, wobei das Entsperren der Benutzerschnittstelle als Reaktion auf die erste Berührungsgeste enthält:
Berechnen einer Berührungszeit der ersten Berührungsgeste;
Entsperren der Benutzerschnittstelle, falls die Berührungszeit der ersten Berührungsgeste einen voreingestellten Schwellenwert überschreitet; und
Gesperrthalten der Benutzerschnittstelle, falls die Berührungszeit der ersten Berührungsgeste der voreingestellte Schwellenwert oder kleiner ist.

12. Tragbare Vorrichtung nach einem der Ansprüche 1 bis 10, wobei das Entsperren der Benutzerschnittstelle als Reaktion auf die erste Berührungsgeste enthält:
Berechnen einer Bewegungsdistanz der ersten Berührungsgeste;
Entsperren der Benutzerschnittstelle, falls die Bewegungsdistanz der ersten Berührungsgeste einen Distanzschwellenwert überschreitet; und
Gesperrthalten der Benutzerschnittstelle, falls die Bewegungsdistanz der ersten Berührungsgeste der voreingestellte Schwellenwert oder weniger ist.

## Revendications

1. Dispositif portable (10) comprenant :
une unité d'affichage tactile (103) configurée pour détecter une entrée tactile ;
une unité de rétroaction tactile (104) configurée pour générer une rétroaction tactile ;
une unité de caméra (102) configurée pour détecter le regard d'un utilisateur ; et
une unité de commande (105) configurée pour :
lorsque le dispositif portable (10) se trouve dans un état verrouillé, détecter un premier geste tactile par rapport à une première région correspondant à une application sur l'unité d'affichage tactile, dans lequel le premier geste tactile entre dans la première région depuis l'extérieur de la première région ;
essayer de détecter le regard d'un utilisateur lorsque le premier geste tactile est détecté ;
générer une rétroaction tactile indiquant que le premier geste tactile entre dans la première région ;
déverrouiller l'interface utilisateur visuelle en réponse au premier geste tactile si le regard de l'utilisateur est détecté ;
déverrouiller l'interface utilisateur tactile en réponse au premier geste de toucher si le regard de l'utilisateur n'est pas détecté ;
détecter un deuxième geste tactile consistant à activer l'application, dans lequel le deuxième geste tactile est délivré en entrée de manière consécutive au premier geste tactile ; et
exécuter l'application en réponse au deuxième geste tactile.

2. Dispositif portable selon la revendication 1, dans lequel à la fois l'interface utilisateur visuelle et l'interface utilisateur tactile sont déverrouillées si le regard de l'utilisateur est détecté.

3. Dispositif portable selon la revendication 1 ou 2, dans lequel l'exécution de l'application en réponse au deuxième geste tactile comprend les étapes consistant à :
détecter le regard de l'utilisateur ;
fournir l'interface utilisateur visuelle de l'application si le regard de l'utilisateur est détecté ; et
fournir l'interface utilisateur tactile de l'application si le regard de l'utilisateur n'est pas détecté.

4. Dispositif portable selon l'une quelconque des revendications 1 à 3, dans lequel l'exécution de l'application en réponse au deuxième geste tactile comprend l'étape consistant à fournir l'interface utilisateur tactile ainsi que l'interface utilisateur visuelle de l'application si le regard de l'utilisateur est détecté.

5. Dispositif portable selon l'une quelconque des revendications 1 à 4, dans lequel le deuxième geste tactile comprend un mouvement consistant à relâcher le contact du premier geste tactile par rapport à l'unité d'affichage de la première région.

6. Dispositif portable selon l'une quelconque des revendications 1 à 4, dans lequel le deuxième geste tactile comprend un mouvement consistant à presser la première région avec une pression d'un seuil de pression préétabli ou plus.

7. Dispositif portable selon l'une quelconque des revendications 1 à 4, dans lequel le deuxième geste tactile comprend un mouvement consistant à toucher la première région de multiples fois.

8. Dispositif portable selon l'une quelconque des revendications 1 à 4, dans lequel l'application est exécutée en réponse au deuxième geste tactile, si le deuxième geste tactile est délivré en entrée à l'intérieur d'un temps prédéterminé à partir d'un point dans le temps auquel le premier geste tactile est détecté.

9. Dispositif portable selon l'une quelconque des revendications 1 à 4, dans lequel l'application est exécutée en réponse au deuxième geste tactile, si le deuxième geste tactile est détecté à l'intérieur de la première région.

10. Dispositif portable selon l'une quelconque des revendications 1 à 9, dans lequel la rétroaction tactile par rapport au premier geste tactile est générée dans la première région conformément à au moins l'une parmi une forme, une position et une taille de l'interface utilisateur visuelle en liaison avec l'application.

11. Dispositif portable selon l'une quelconque des revendications 1 à 10, dans lequel le déverrouillage de l'interface utilisateur en réponse au premier geste tactile comprend les étapes consistant à :
calculer un temps de toucher du premier geste tactile ;
déverrouiller l'interface utilisateur si le temps de toucher du premier geste tactile dépasse un seuil préétabli ; et
maintenir l'interface utilisateur verrouillée si le temps de toucher du premier geste tactile correspond au seuil préétabli ou moins.

12. Dispositif portable selon l'une quelconque des revendications 1 à 10, dans lequel le déverrouillage de l'interface utilisateur en réponse au premier geste tactile comprend les étapes consistant à :
calculer une distance de mouvement du premier geste tactile ;
déverrouiller l'interface utilisateur si la distance de mouvement du premier geste tactile dépasse un seuil de distance ; et
maintenir l'interface utilisateur verrouillée si la distance de mouvement du premier geste tactile correspond au seuil préétabli ou moins.
